# EUROPEAN PATENT APPLICATION

(11) **EP 1 195 317 A2**
(43) Date of publication of application: **10.04.2002**
(21) Application number: 01500193.6
(22) Date of filing: 18.07.2001
(51) Int. Cl.: B62K 5/00, B62K 9/00

(54) **Child's vehicle**

(30) Priority: 06.10.2000 ES 200002443 U
(71) Applicant: Rodriguez Martinez, S.C., 03440 Ibi, Alicante (ES)
(72) Inventor: Rodriguez Ferre, José Manuel, 03440 Ibi (Alicante) (ES)
(74) Representative: Isern-Cuyas, Maria Luisa

(57) **Abstract**

CHILD'S VEHICLE, of the jeep type, composed of a set of plastic material parts that can be easily assembled by an adult with the help of conventional tools, such as a wrench and a screwdriver. It is constituted by a part corresponding to the main chassis (1) of the vehicle and includes two motors (2) and the respective transmissions to the front wheels (3), as well as a seat (4) fastened by screws underneath which there is a housing for the battery (5) and its charger (11). Said chassis (1) serves as a support for the set of parts completing the vehicle, amongst which are a front protection (6) attached to the front part of the vehicle by means of screws, a pair of front (7a) and back (7b) racks for holding articles, which are fastened to homologous respective areas by means of screws. The axis of the handlebar (8) is fastened to the axle (9a) of the front wheel (9) steering whilst two representative parts of the streamline (19) with all their complements are fastened to said handlebar (8).

## Description

### PURPOSE

The purpose of this request for a Patent is a child's vehicle that provides for the function for which it is intended various advantages to be detailed later on, apart from others inherent to its organization and constitution.

More specifically, the invention has designed a vehicle that adopts the shape of a motorized jeep, especially conceived so that it can be driven by a child over the age of three years. This vehicle is equipped with electric motors supplied by refillable batteries.

### HISTORY

There are children's vehicles at present on the market consisting in cars, motorbikes and other vehicles supplied by batteries. These constitute cumbersome sets that are very heavy and have a sophisticated assembly, that occupy excessive storage space and are difficult to transport. Therefore, it is necessary to obtain children's vehicles having a greater constructive and functional simplicity.

### DESCRIPTION OF THE INVENTION

The child's vehicle, purpose of this invention, satisfactorily resolves the above problems and is characterized by its basic structural element consisting of a monoblock body of hard plastic material simulating the set of the chassis, including two motors and the respective transmission to the back wheels, two pairs of front and back wheels, a seat under which the battery and its charger are housed and which serves as a support for a variety of parts making up the vehicle.

The association of said parts with respect to the basic element serving as their support is made in a simple way by an adult with the help of elemental tools such as a wrench and screwdriver.

The wheels of the vehicle are made of a single plastic part obtained by blowing.

The characteristics of the vehicle in question provide, amongst other advantages, a noticeable simplification in the fabrication process that favorably affects the costs, as well as giving said vehicles notable sturdiness, solidity and toughness in order to extend their useful life.

As indicated above, the invention includes a battery and electric motors connected through a circuit that opens and closes by means of a bipolar switch with six sides operated by an accelerator pedal and a gear box operated by the child. The back wheels of the vehicle are operated by transmissions whilst the front wheels constituting a directrix are operated by a handlebar controlled by the child.

An arrangement of two plugs respectively connected to the battery of the vehicle and to the wiring of the motor circuit establish the connection between said elements and, when unplugged, permit the battery to be recharged when the plug of the battery is connected to a third plug corresponding to the charger previously connected to the mains.

Assembly of the vehicle is made on the chassis of the streamline, the handlebar, a seat covering the battery and charger housing that is easily accessible, a front reinforcement and two front and back racks for holding articles.

In order to complement the description which follows and to help with a better understanding of the characteristics of the invention, this descriptive report includes a set of drawings in which the most significant details are represented in an illustrative but not limiting way.

### BRIEF DESCRIPTION OF THE DRAWINGS

Figures 1 and 2 show perspective front and back views of the assembled vehicle.
Figures 3 to 10 shows successive assembly stages of said vehicle.
Figures 11 shows a detail in which the housing for the battery charger and the battery is indicated.
Figures 12 to 17 show successive stages for charging the battery.

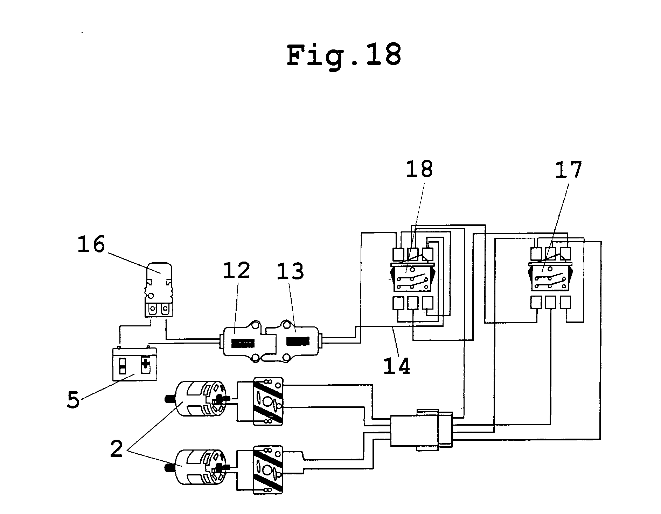

Figure 18 shows a diagram of the electrical circuit of the vehicle.

### PERFORMANCE EXAMPLE DESCRIPTION OF THE INVENTION

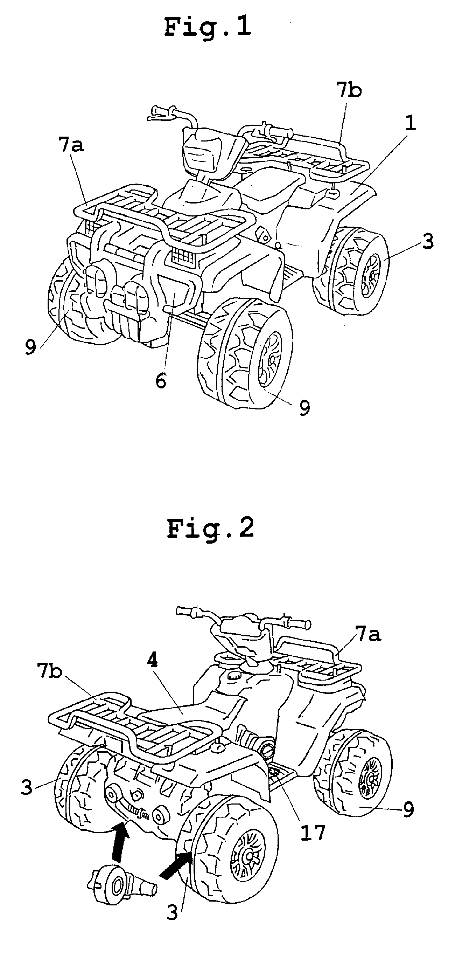

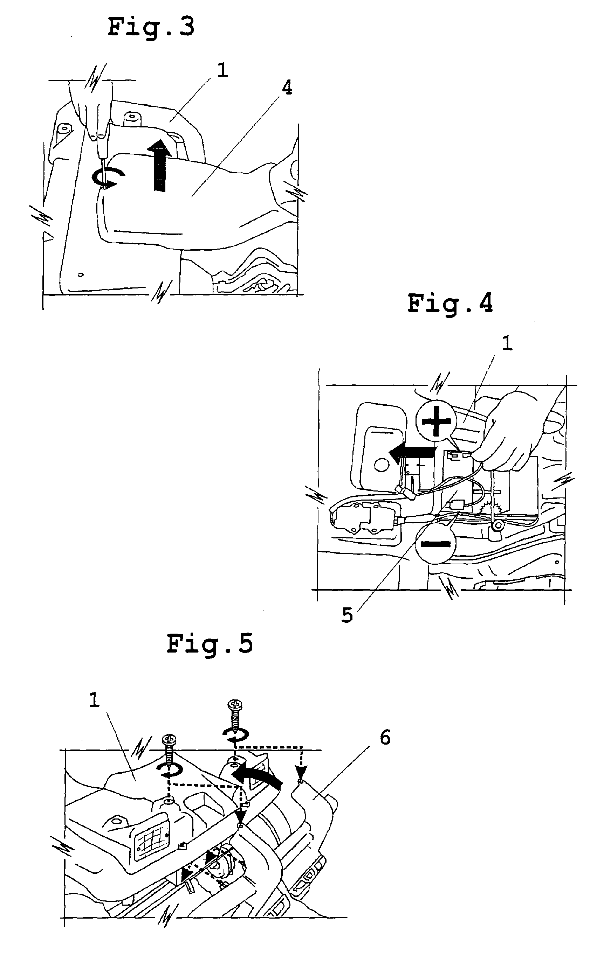

In view of the figures commented above and in accordance with the numbering used, a child's vehicle can be seen. This consists of a type of jeep (figures 1 and 2), which is composed of a set of plastic material parts that can be easily assembled by an adult with the help of conventional tools, such as a wrench and a screwdriver. The vehicle is made up of a part corresponding to its main chassis -1-, including two motors -2- and the respective transmission to the back wheels -3-, as well as a seat -4- which is screwed on, underneath which is a housing for the battery -5- as indicated in figures 3 and 4.

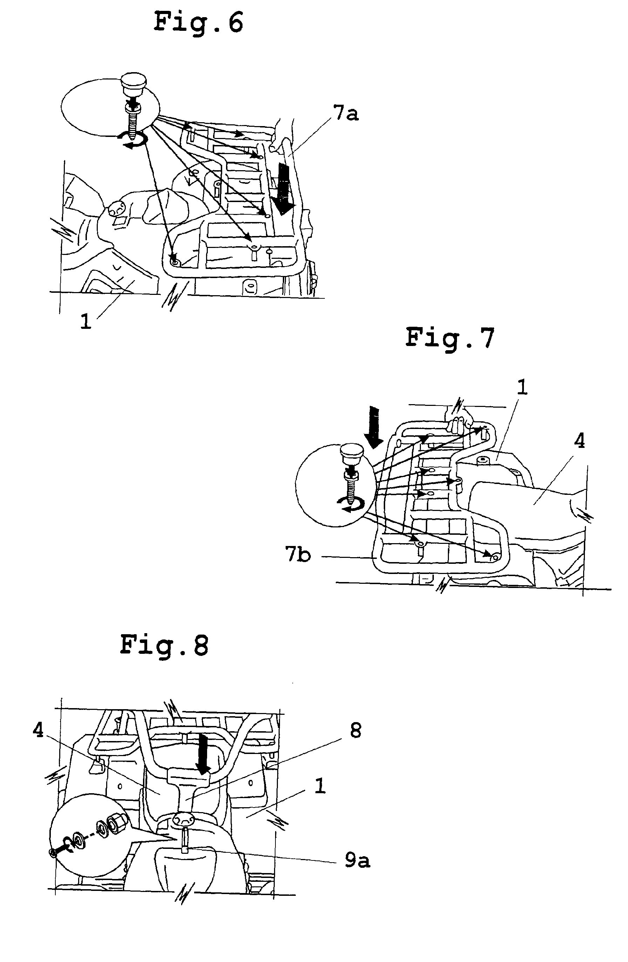

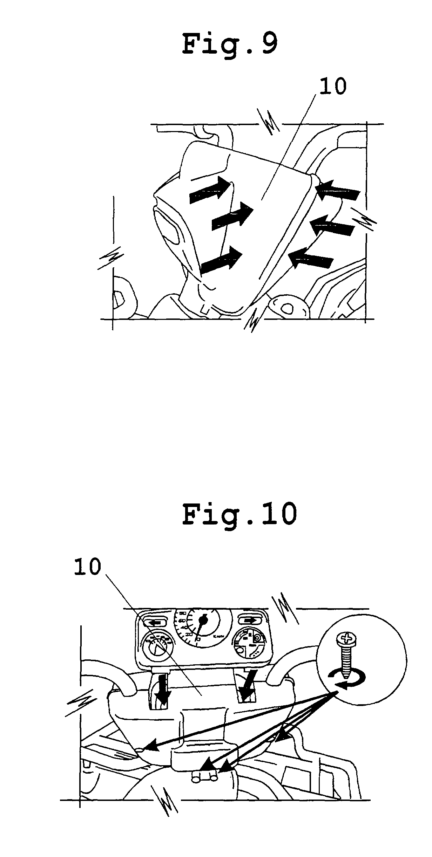

This chassis -1- serves as a support for the set of parts completing the vehicle, amongst which are a front protection -6- that is fastened by screws to the front part of the vehicle, as indicated in figure 5, front -7a- and back -7b- racks for holding articles that are fastened by screws on to the respective homologous areas of the vehicle, as indicated in figures 6 and 7, fastening of the handlebar axis -8- on to the axle -9a- of the front wheel steering -9- of the vehicle, as indicated in figure 8, and fastening of two representative parts of the streamline -10- on to said handlebar -8- with all their complements, as indicated in figures 9 and 10.

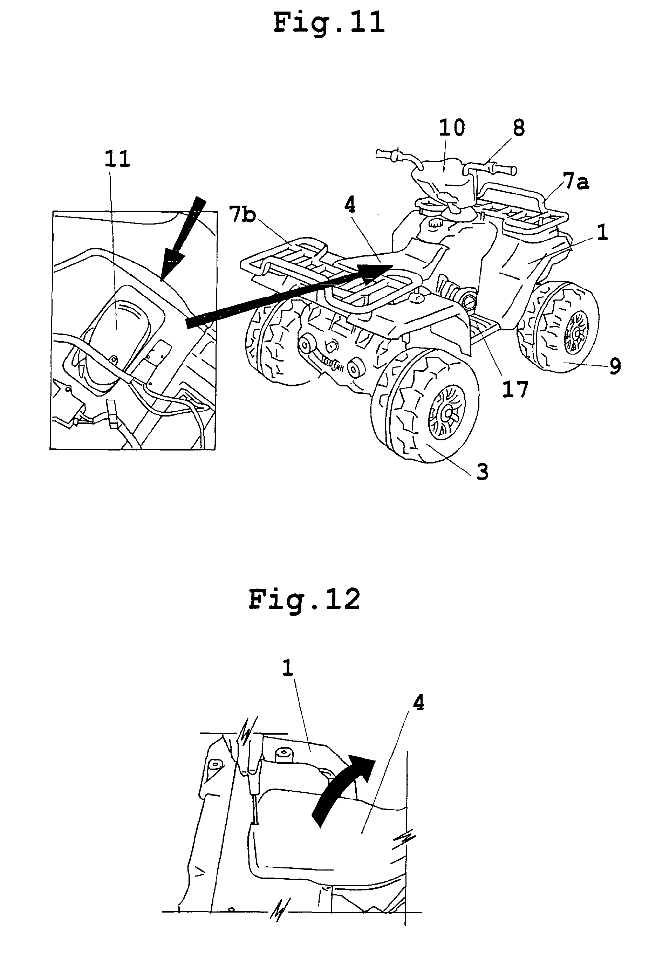

Figure 11 indicates how the seat also covers a charger -11- for the battery.

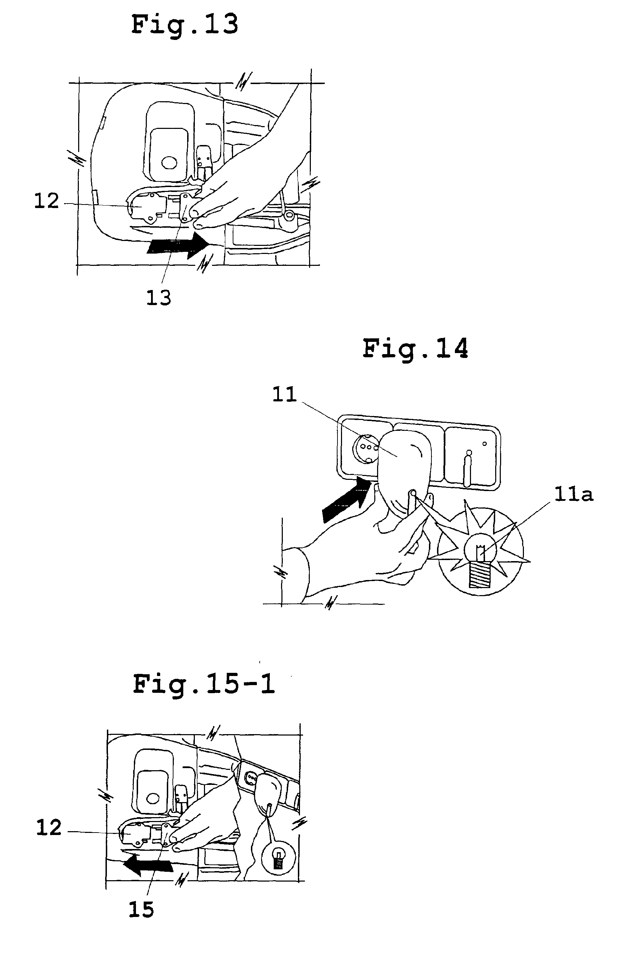

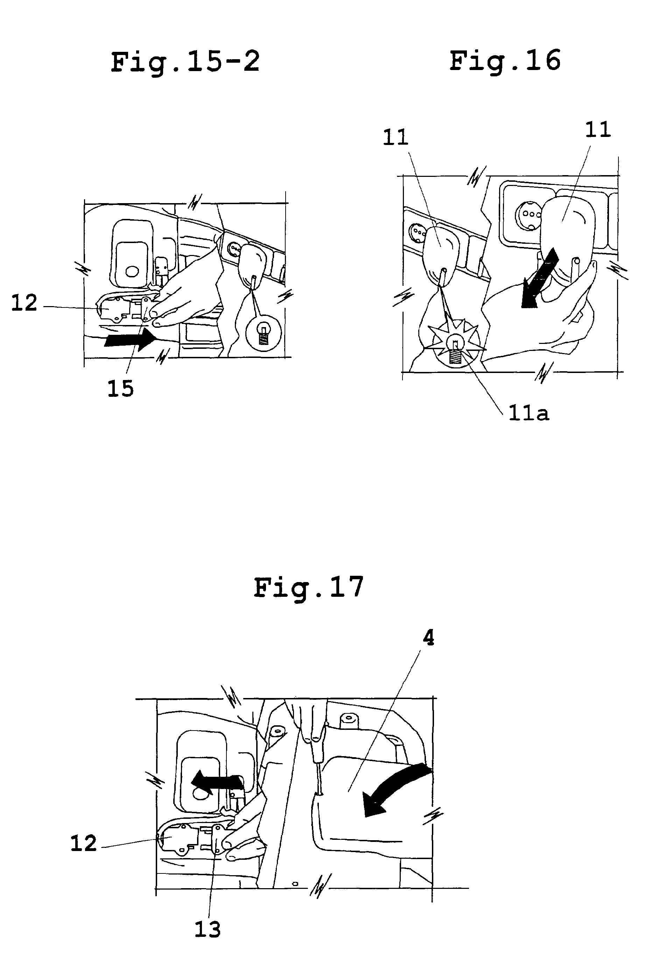

Figures 12 to 17 show the charge of said battery -5- in such a way that figure 12 indicated how the lid -4- is to be pressed and lifted, figure 13 shows disconnection of the plug - 12- of the battery from the plug -13- of the wiring, whilst figure 14 shows the connection of the charger -11 to the mains. Figure 15.1 shows the connection of the plug -15- of the charger -11- to the plug -12- of the battery -5-. The pilot light -11a- of the charger -11- will be turned off indicating the battery - 5- is charging, whilst when the pilot light -11a- comes on again the battery -5- will be charged. Figures 15.2 and 16 show that once the battery -1- is charged, the plug -15- of the charger - 11- and the plug -12 of the battery -5- of the vehicle must be disconnected and the charger -11- disconnected from the mains. Figure 17 shows connection of the plug -12 of the battery -5- to the plug -13- of the wiring -14- and the lid -4- is replaced in its position of use.

Likewise, the electrical circuit includes the battery -5- and the motors -2-; the plug -12- connected to the battery -5and the plug -13 connected to the wiring -14, and both interconnected in the functional position of the vehicle; the circuit breaker -16-; an accelerator pedal -17- that operates on a bipolar closing switch of the electrical circuit allowing the electrical supply current of the motors -2- to pass, which through the corresponding transmissions operates the respective propelling back wheels -3- of the vehicle; and a gear box -18-.

## Claims

1. CHILD'S VEHICLE of the jeep type, composed of a set of plastic material parts that can be easily assembled by an adult with the help of conventional tools, such as a wrench and a screwdriver, basically **characterized by** the fact that it is constituted by a part corresponding to the main chassis (1) of the vehicle, including two motors (2) and the respective transmissions to the back wheels (3), as well as a seat (4) fastened by screws underneath which there is a housing for the battery (5) and its charger (11). Said chassis (1) serves as a support for the set of parts completing the vehicle, amongst which are a front protection (6) capable of being attached to the front part of the vehicle by means of screws, a pair of front (7a) and back (7b) racks for holding articles, which are fastened to homologous respective areas by means of screws. The axis of the handlebar (8) is fastened to the axle (9a) of the front wheel (9) steering whilst two representative parts of the streamline (19) with all their complements are fastened to said handlebar (8).

2. CHILD'S VEHICLE, according to claim 1, **characterized by** the fact that the electrical circuit includes the battery (5) and the motors (2); the plug (12) connected to the battery (5) and the plug (13) connected to the wiring (14), which are interconnected in the functional position of the vehicle; the circuit breaker (16); an accelerator pedal (17) that operated on a bipolar closing switch of the electrical circuit allowing the electrical supply current of the motors (2) to pass, which through the corresponding transmissions operates the respective propelling back wheels (3) of the vehicle; and a gear box (18).
